# EUROPEAN PATENT APPLICATION

(11) **EP 3 202 924 A1**
(43) Date of publication of application: **09.08.2017**
(21) Application number: 16154237.8
(22) Date of filing: 04.02.2016
(51) Int. Cl.: C21D 8/06, C21D 9/52, C22C 38/02, C22C 38/04, C22C 38/18, B21F 27/00, E21D 11/15

(54) **PROTECTIVE FENCES**

(71) Applicant: NV Bekaert SA, 8550 Zwevegem (BE)
(72) Inventor: SUAZO LUENGO, Alejandro, Talcahuano (CL); MESPLONT, Christophe, 59420 Mouvaux (FR); PAREDES Montecinos, Hector, TALCAHUANO (CL)
(74) Representative: Messely, Marc

(57) **Abstract**

A protective fence for rock fall protection structures or to stabilise a layer of earth, comprising a plurality of elongated steel elements being interconnected in form of meshes,
wherein at least one of the plurality of elongated steel elements is made from steel having as steel composition:
a carbon content ranging from 0.20 weight percent to 0.95 weight percent,
a silicon content ranging from 0.5 weight percent to 2.0 weight percent,
a manganese content ranging from 0.40 weight percent to 1.0 weight percent,
a chromium content ranging from 0.0 weight per cent to 1.0 weight percent,
a sulphur and phosphor content being limited to 0.025 weight percent, the remainder being iron,
and said steel has as metallurgical structure:
a volume percentage of retained austenite ranging from 4 percent to 25 percent, the remainder being tempered primary martensite and untempered secondary martensite.

## Description

### Technical Field

The invention relates to protective fences, in particular to protective fences for rock fall or slope protection structures or to stabilise a layer of earth in mining operations and the production method thereof.

### Background Art

During the last twenty years, slope stabilization, road protection and rock support has been extensively assisted by wires products, such as mesh and ropes, whose designs have been adapted according to load and deformation requirements. New solutions with different mesh designs have been actively developed. Those solutions are based on carbon steel material in order to be competitive and cost effective while being limited in performance from the material selection point of view.

Carbon steel materials that are used in those solutions can vary depending on the applications. As an example, in case of woven and welded gabions normally galvanized low carbon steel is applied, while in slope stabilization galvanized high carbon steel is used in order to achieve high stiffness in final product. In general, for critical applications, high tensile strength material has been used with the consequent loss in ductility and also loss in energy dissipation/absorption. For this reason, designs for covering new high demanding energy absorption requirements have been improved. One example is the complex ring or meander-shaped mesh configuration able to withstand high energy coming from rock falling in order to perform at required energy absorption level for road protection, together with other elements such as friction breaks, poles and tensors/ropes.

Nevertheless, energy absorption specifications are not always reached with standard products/configurations, and are needed to go for overdesign and consequent extra costs jeopardizing economically and technically the operation. One example is rock support in deep underground mining where due to high pressure rock displacement is generated related to squeezing rocks and/or prone to rock burst areas. Also in road protection can be seen the use of heavy solutions for reaching the desired specifications which include several auxiliary elements to reach the desired energy absorption.

Material is extensively used for wire meshes in the field of slope stabilization, road protection and rock support. Thus, the use and installation of wire meshes carry high costs in the final solution of protective fences. There is a need for new materials able to withstand higher requirements but keeping simple designs and avoiding heavy solutions as much as possible.

### Disclosure of Invention

It is an object of the invention to avoid the disadvantages of the prior art.

It is also an object of the invention to provide a wire mesh with high performance for effective road protection and rock support.

It is another object of the present invention to provide a protective fence for reacting to movement of rock mass or rock fall and absorbing high energy impact.

According to a first aspect of the present invention, there is provided a protective fence for rock fall protection structures or to stabilize a layer of earth, comprising a plurality of elongated steel elements being interconnected in form of meshes, wherein at least one of the plurality of elongated steel elements is made from steel having as steel composition:
a carbon content ranging from 0.20 weight percent to 0.95 weight percent,
a silicon content ranging from 0.5 weight percent to 2.0 weight percent,
a manganese content ranging from 0.40 weight percent to 1.0 weight percent,
a chromium content ranging from 0.0 weight per cent to 1.0 weight percent,
a sulphur and phosphor content being limited to 0.025 weight percent,
the remainder being iron,
and said steel has as metallurgical structure:
   a volume percentage of retained austenite ranging from 4 percent to 25 percent, the remainder being tempered primary martensite and untempered secondary martensite.

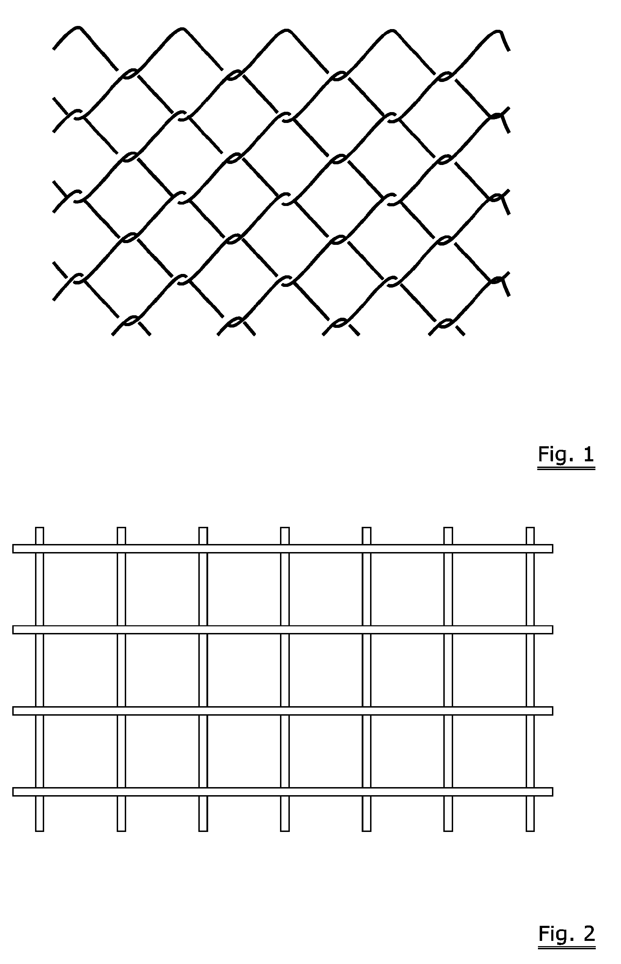

As an example, the plurality of elongated steel elements may be chain-linked in form of meshes. As shown in Fig. 1, chain-linked mesh is a fence of steel wires woven into a diamond pattern. Each steel wire is preformed by bending so that it exhibits a wavy pattern with maxima and minima. The maxima of a steel wire interlock with the minima of a neighbouring wire to form the patterns of a series of diamonds.

As another example, the plurality of elongated steel elements may be welded in form of meshes. Welded wire mesh as shown in Fig. 2 is an electric fusion welded prefabricated joined grid consisting of a series of parallel longitudinal wires with accurate spacing welded to cross wires at the required spacing.

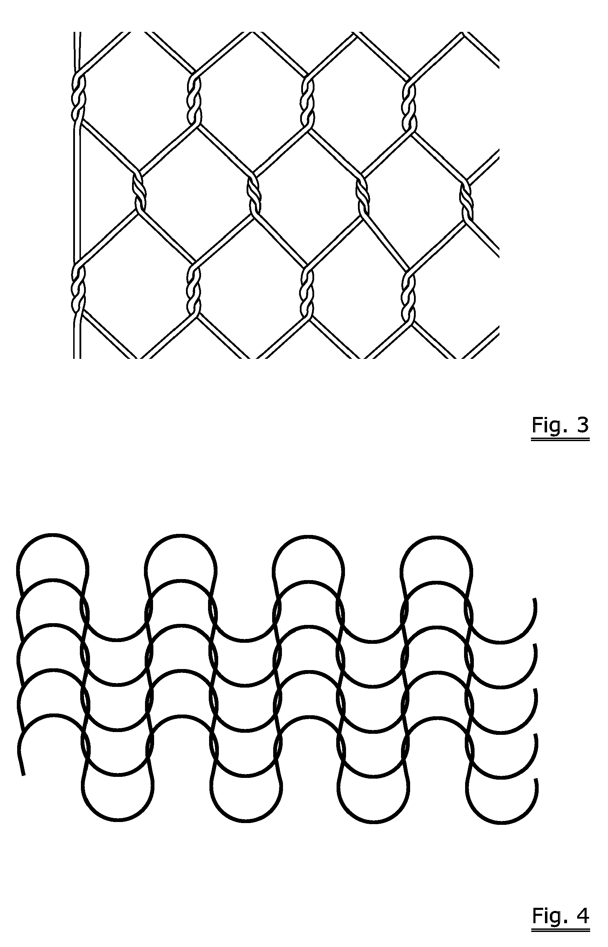

As still another example, the plurality of elongated steel elements may be woven in form of meshes. As an example shown in Fig. 3, a woven wire netting for protective fence is formed from a hexagonal individual wire meshes. Such wire netting consists of steel wires stranded during weaving. The hexagonal shape of the individual meshes results following the repeated stranding of two wires which are woven together, whereby these stranded points run in the longitudinal direction of the netting and the individual wires in between run diagonally.

As still another example, the plurality of elongated steel elements may be meander-shaped wires interconnected in form of knitted meshes in a form-locked state. Fig. 4 shows an example of such a wire net. Each meander-shaped wire includes a plurality of meanders, wherein a first meander on a first wire embraces a second meander on a second wire from below the second meander, and wherein a third meander on a third wire embraces the first meander from above the first meander, and wherein the third meander does not embrace the second meander.

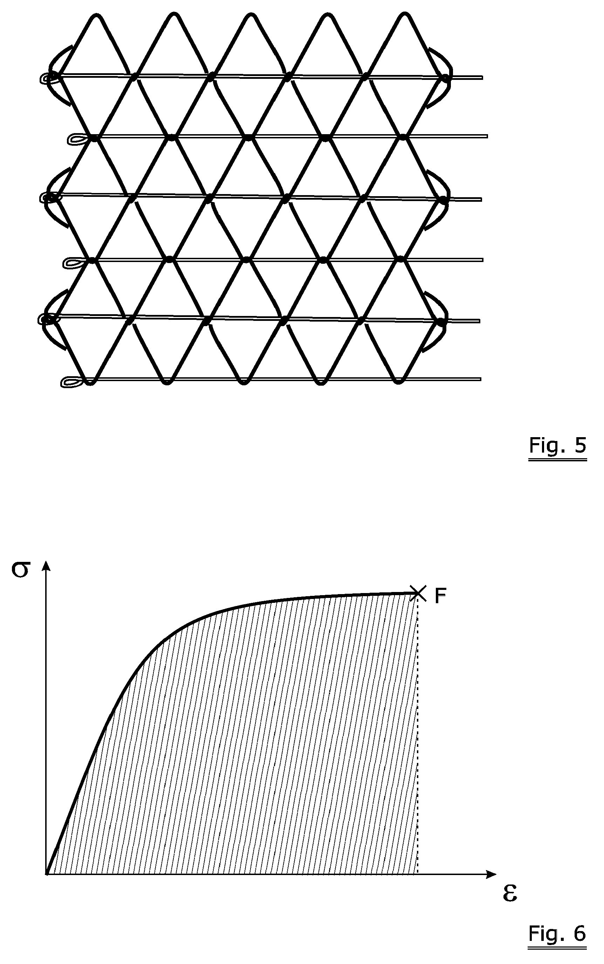

As yet another example shown in Fig. 5, the elongated steel elements are helically curved and are braided, such that rhomboidal meshes are formed and in each case two adjacent helical elongated steel elements are flexibly held together, and the mesh has a thickness which amounts to a multiple of the thickness of elongated steel elements, wherein in at least some of the pairs of the elongated steel elements an essentially straight elongated element is guided through the coupling area of the two helical elongated steel elements, i.e. through the intersecting curves thereof, causing the rhomboidal meshes to be divided into triangular meshes and with which the two elongated steel elements are in flexible connection.

According to the present invention, at least one of the plurality of elongated steel elements may have a corrosion resistant coating, and preferably a metallic coating selected from the group consisting of zinc, zinc aluminium alloy, zinc aluminium magnesium alloy.

The plurality of elongated steel elements can be a plurality of steel wires or steel single filaments. Alternatively, the plurality of elongated steel elements can be a plurality of steel strands or ropes. In the content of the present invention, 'strands' can also be interpreted as 'cords'. It is typically made up of several single filaments. 'Single filament' in this context is a wire of a single, uninterrupted length. Herein, individual wires having an uninterrupted length need not be the same, depending on its needed properties. The filaments or wires are twisted with an intended lay length to form a strand or a rope. For instance, the plurality of steel strands is individually formed by twisting two steel filaments.

For elongated elements used for rock fall protection structures, both the deformation at fracture and the tensile strength are important properties. More importantly, the energy absorption ability of the elongated elements presents the performance in dynamic environment. The capacity of energy absorption of an elongated element can be estimated from an engineering stress-strain curve. An engineering stress-strain curve is typically constructed from the load deformation measurements. In the test a specimen is subjected to a continually increasing uniaxial tensile force while simultaneous observations are made of the deformation of the specimen. Deformation is the change in axial length divided by the original length of the specimen. A typical stress-stain curve of a metal is illustrated in Fig. 6. The relationship between the stress (σ) and strain (ε) that a particular material displays is known as that particular material's stress-strain curve. As indicated by the shaded area in Fig. 6, the energy absorption (also called energy dissipation) is the integrated area under the entire stress-strain curve to the break or fracture point (as indicated by point F in the curve of Fig. 6) where the test specimen is fractured.

The wires according to the present invention have good energy absorption, which is not a character of conventional ones. According to the present invention, the tensile strength of the plurality of steel wires can be more than 1200 MPa and the elongation at fraction of the plurality of steel wires can be at least 7%. Preferably, the diameter of the plurality of steel wires is in the range of 2.5 mm to 3.5 mm and the energy dissipation of the plurality of steel wires is more than 200 Joule. Alternatively, the diameter of the plurality of steel wires may be in the range of 3.5 mm to 4 mm and the energy dissipation of the plurality of steel wires is more than 350 Joule. According to the present invention, the diameter of the plurality of steel wires can be in the range of 1 mm to 6 mm and the energy dissipation of the plurality of steel wires is more than 20 kJ/kg. In pulling test measurements, energy dissipation per kilogram of material according to the present invention is normally in a range of 21 to 28 kJ/kg, whilst the conventional redrawn high carbon steel is between 4 to 7 kJ/kg.

According to a second aspect of the present invention, it is provided a process of manufacturing a protective fence for rock fall protection structures or to stabilise a layer of earth, comprising a plurality of steel wires being interconnected in form of meshes, said process comprising the following steps:
a) selecting a plurality of steel wires with steel composition:
   a carbon content ranging from 0.20 weight per cent to 0.95 weight percent,
   a silicon content ranging from 0.5 weight per cent to 2.0 weight percent,
   a manganese content ranging from 0.40 weight per cent to 1.0 weight percent,
   a chromium content ranging from 0.0 weight per cent to 1.0 weight percent,
   a sulphur and phosphor content being limited to 0.025 weight percent,
   the remainder being iron,
b) austenitizing said plurality of steel wires above Ac3 temperature between 920°C and 980°C during a period less than 120 seconds,
c) quenching said austenitized plurality of steel wires between 20°C and 280°C during a period less than 60 seconds,
d) partitioning said quenched plurality of steel wires between 320°C and 500°C during a period ranging from 10 seconds to 600 seconds,
e) cooling down the partitioned plurality of steel wires to room temperature,
f) interconnecting the quenched and partitioned plurality of steel wires into form of meshes,
g) assembling the meshes into a protective fence.

After the quenching step, which occurs between Ms, the temperature at which martensite formation starts and Mf, the temperature at which martensite formation is finished, retained austenite and martensite has been formed. During the partitioning step, carbon diffuses from the martensite phase to the retaining austenite in order to stabilize it more. The result is a carbon-enriched retained austenite and a tempered martensite.

After the partitioning step, the partitioned steel wire is cooled down to room temperature. The cooling can be done in a water bath. This cooling down causes a secondary untempered martensite, next to the retained austenite and the primary tempered martensite.

The austenitizing step occurs at temperatures ranging from 920°C to 980°C, and preferably between 930°C and 970°C. Preferably, the partitioning step d) occurs at relatively high temperatures ranging from 400°C to 500 °C, more preferably from 420 °C to 460 °C. The inventor has experienced that these temperature ranges are favourable for the stability of the retained austenite in the final steel wire.

In addition, the quenched and partitioned plurality of steel wires can first be stranded into strands or ropes and thereafter the strands or ropes are interconnected into form of meshes. Therefore, the wire meshes of protective fence are made from strands or ropes.

### Brief Description of Figures in the Drawings

Figure 1 shows a schematic view of a chain-link wire mesh of a protective fence according to the invention.
Figure 2 shows a schematic view of a welded wire mesh of a protective fence according to the invention.
Figure 3 shows a schematic view of a woven wire mesh of a protective fence according to the invention.
Figure 4 shows a schematic view of a wire mesh of a protective fence according to the invention, wherein the meander-shaped wires are interconnected in form of knitted meshes in a form-locked state.
Figure 5 shows a schematic view of another wire mesh of a protective fence according to the invention.
Figure 6 is a schematic illustration of a typical stress-strain curve of a metal.
Figure 7 shows the instant load versus elongation from the load deformation measurement for the wire according to the present invention and for a reference steel wire.

### Mode(s) for Carrying Out the Invention

A protective fence according to the present invention comprises a plurality of elongated steel elements interconnected in form of meshes. As an example, the elongated steel elements are steel wires having a diameter of 3.76 ± 0.1 mm and have as a steel composition: a carbon content of 0.55 weight percent, a silicon content of 1.2 weight percent, a manganese content of 0.7 weight percent, a chromium content of 0.6 weight percent and the remainder being iron. The starting temperature of martensite transformation Ms of this steel is about 280°C.

The steel wire is treated by various steps of the process as follows:
- a first austenitizing step during which the steel wire stays in a furnace at about 950 °C during 120 seconds,
- a second quenching step for partial martensite transformation at a temperature between 20°C and 280 °C during less than 25 seconds;
- a third partitioning step for moving carbon atoms from the martensite phase to the austenite phase to stabilize this at a temperature around 460 °C during about 15 seconds; and
- a fourth cooling step at room temperature during 20 or more seconds. The steel wire produced through above process has as metallurgical structure: a volume percentage of retained austenite of about 20 percent, the remainder being tempered primary martensite and untempered secondary martensite.

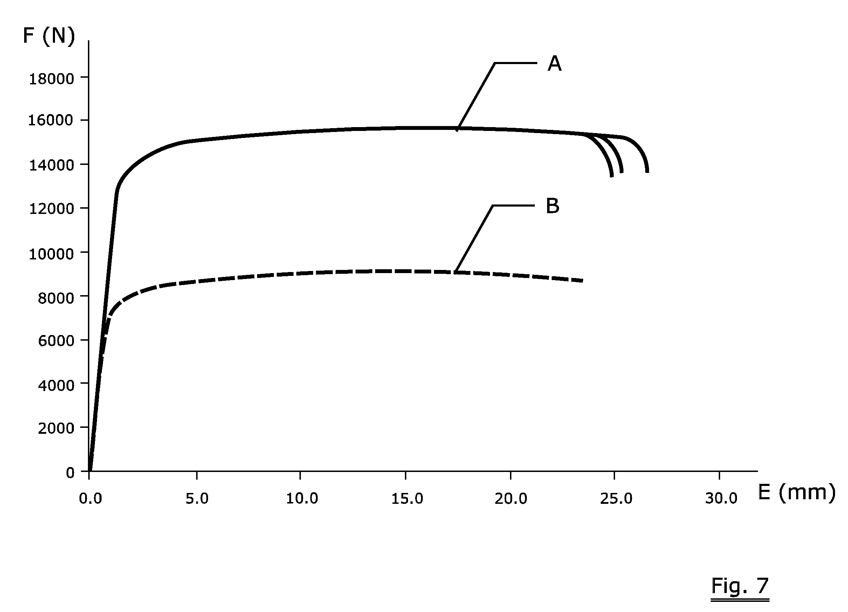

As a comparison, a steel wire with the same diameter but different metallurgical structure is taken as a reference. Figure 7 shows the instant load versus elongation from the load deformation measurement for the wire according to the present invention (curve A) and for the reference steel wire (curve B). As shown in Fig. 7, the tensile strength of the invention wire is significantly higher than that of the reference wire although the elongation of the invention wire is slightly lower than that of the reference wire. The energy dissipation can be calculated by the respective area under curve A and B.

The tensile strength, elongation at fracture, and the energy dissipation of the invention steel wire and the reference steel wire are compared in table 1.

**Table 1. Wire characteristics of the invention wire vs. the reference wire**

| Wire characteristics | Invention steel wire | Reference steel wire |
|---|---|---|
| Tensile strength (MPa) | 1578 | 930 |
| Elongation at fracture (%) | 12.8 | 13.8 |
| Energy dissipation (J) | 383 | 225 |

In this example, an increase of energy dissipation of ~76% is obtained when the reference wire is switched to the invention steel wire. Furthermore, some standard common solutions could be switched by the invention wire in order to decrease the material weight but keeping same energy dissipation performance. As an example, considering a fixed reference diameter of 3.76 mm able to reach 225 Joule energy dissipation, if it is needed to reach same level of energy dissipation, the required invention wire would be 2.84 mm in diameter reaching the same performance as the standard wire. This means that material saving of 43% can be reached and keeping same energy dissipation for the same solution. In addition, the energy dissipation of the wires according to the invention having different diameters are also measured in pulling test and compared with a reference wire in table 2. As can be seen in table 2, the energy dissipation of invention wires per kilogram is in a range of 21 to 28 kJ/kg, whilst the conventional redrawn high carbon steel reference wore is just 4.6 kJ/kg.

**Table 2. Energy dissipation of invention wire having different diameter vs. the reference wire**

| Wire Diameter (mm) | | Energy (J) | Energy (kJ/kg) |
|---|---|---|---|
| Invention wire | 3.63 | 363 | 21.7 |
| | 3.54 | 350 | 21.6 |
| | 2.98 | 298 | 27.1 |
| | 2.02 | 137 | 27.3 |
| Reference wire | 2.95 | 50 | 4.6 |

It is known with respect to wire products that the wire properties are changed in similar ways as in final product. This effect has been observed in products such as meshes (e.g. mining mesh) and strands/ropes (e.g. cable bolts). The properties of the invention wires are transferred to final wire meshes or protective fences in a similar magnitude.

The invention wire and the reference wire are individually chain-linked into a wire mesh. The mesh opening is around 80 mm and the mesh thickness is around 30 mm. Punching tests performed with a plate of 200x200x20 mm show the wire mesh net made from the invention steel wires has a much bigger breaking load and energy dissipation than the wire mesh net made from the reference steel wires.

## Claims

1. A protective fence for rock fall protection structures or to stabilise a layer of earth, comprising a plurality of elongated steel elements being interconnected in form of meshes,
wherein at least one of the plurality of elongated steel elements is made from steel having as steel composition:
a carbon content ranging from 0.20 weight percent to 0.95 weight percent,
a silicon content ranging from 0.5 weight percent to 2.0 weight percent,
a manganese content ranging from 0.40 weight percent to 1.0 weight percent,
a chromium content ranging from 0.0 weight per cent to 1.0 weight percent,
a sulphur and phosphor content being limited to 0.025 weight percent,
the remainder being iron,
and said steel has as metallurgical structure:
a volume percentage of retained austenite ranging from 4 percent to 25 percent, the remainder being tempered primary martensite and untempered secondary martensite.

2. The protective fence according to claim 1, wherein the plurality of elongated steel elements is chain-linked in form of meshes.

3. The protective fence according to claim 1, wherein the plurality of elongated steel elements is welded in form of meshes.

4. The protective fence according to claim 1, wherein the plurality of elongated steel elements is woven in form of meshes.

5. The protective fence according to claim 1, wherein the plurality of elongated steel elements is meander-shaped wires interconnected in form of knitted meshes in a form-locked state.

6. The protective fence according to claim 1, wherein the elongated steel elements are helically curved and are braided, such that rhomboidal meshes are formed and in each case two adjacent helical elongated steel elements are flexibly held together, and the mesh has a thickness which amounts to a multiple of the thickness of elongated steel elements, wherein in at least some of the pairs of the elongated steel elements an essentially straight elongated element is guided through the coupling area of the two helical elongated steel elements, i.e. through the intersecting curves thereof, causing the rhomboidal meshes to be divided into triangular meshes and with which the two elongated steel elements are in flexible connection.

7. The protective fence according to any one of the preceding claims, wherein at least one of the plurality of elongated steel elements has a corrosion resistant coating.

8. The protective fence according to any one of the preceding claims, wherein the plurality of elongated steel elements is a plurality of steel wires.

9. The protective fence according to any one of claims 1 to 7, wherein the plurality of elongated steel elements is a plurality of steel strands.

10. The protective fence according to claim 9, wherein the plurality of steel strands is individually formed by twisting two steel filaments.

11. The protective fence according to any one of claims 1 to 8, wherein the tensile strength of the plurality of steel wire is more than 1200 MPa and the elongation at fraction of the plurality of steel wires is at least 7%.

12. The protective fence according to any one of claims 1 to 8, wherein the diameter of the plurality of steel wires is in the range of 2.5 mm to 3.5 mm and the energy dissipation of the plurality of steel wires is more than 200 Joule.

13. The protective fence according to any one of claims 1 to 8, wherein the diameter of the plurality of steel wires is in the range of 1 mm to 6 mm and the energy dissipation of the plurality of steel wires is more than 20 kJ/kg.

14. A process of manufacturing a protective fence for rock fall protection structures or to stabilise a layer of earth, comprising a plurality of steel wires being interconnected in form of meshes, said process comprising the following steps:
a) selecting a plurality of steel wires with steel composition:
a carbon content ranging from 0.20 weight per cent to 0.95 weight percent,
a silicon content ranging from 0.5 weight per cent to 2.0 weight percent,
a manganese content ranging from 0.40 weight per cent to 1.0 weight percent,
a chromium content ranging from 0.0 weight per cent to 1.0 weight percent,
a sulphur and phosphor content being limited to 0.025 weight percent,
the remainder being iron,
b) austenitizing said plurality of steel wires above Ac3 temperature between 920°C and 980°C during a period less than 120 seconds,
c) quenching said austenitized plurality of steel wires between 20°C and 280°C during a period less than 60 seconds,
d) partitioning said quenched plurality of steel wires between 320°C and 500°C during a period ranging from 10 seconds to 600 seconds,
e) cooling down the partitioned plurality of steel wires to room temperature,
f) interconnecting the quenched and partitioned plurality of steel wires into form of meshes,
g) assembling the meshes into a protective fence.
